# EUROPEAN PATENT APPLICATION

(11) **EP 4 708 032 A1**
(43) Date of publication of application: **11.03.2026**
(21) Application number: 24198950.8
(22) Date of filing: 06.09.2024
(51) Int. Cl.: G06F 8/65, G05B 19/05

(54) **SYSTEM AND METHOD FOR FIRMWARE UPDATE IN SAFETY REMOTE INPUT OPERATIONS**

(71) Applicant: ifm electronic gmbh, 45128 Essen (DE)
(72) Inventor: Nickl, Benjamin, 88045 Friedrichshafen (DE); Wrona, Philipp, 88087 Eriskirch (DE)
(74) Representative: Ifm Patentabteilung

(57) **Abstract**

A system and method for firmware update in Safety Remote Input Output devices is provided. The device includes a communication module 102 configured to handle data transfer, power supply modules providing the necessary electrical energy or other resources required during operation of an loT-enabled safety remote input output unit ("SRIO 302") apparatuses such as sensors 107/actuators 108; microcontroller units managing all components associated with each component relatively connected sensor, actuator; interface ports connecting one end thereof directly into another external port via various DIP switches 111 that are integrated within different parts on board respective hardware elements including processor chips used by multiple controller systems through which updates can be performed without interruption from any physical equipment installed at either side nor remotely between these two independent circuitry).

## Description

### TECHNICAL FIELD

The present application generally relates to a system and method for firmware update in safety remote input operations, and more particularly to the management and execution of firmware updates in a secure and efficient manner.

EP4287054 A1 is related to a Computer-implemented method for updating a safety software code providing a safety function to a computing hardware device comprising the following steps. Executing a host module by the computing hardware device, wherein a first environment and a second environment are operated in isolation from each other by the host module. A reception of an update package by a reception software operated in the first environment precedes a verification of a fulfilment of predefined update conditions by the update package by an update software operated in the second environment, wherein the verification of the fulfilment of the predefined update conditions. This ends in an inclusion of the update code element into the safety software code in the second environment by the update software.

### PROBLEM STATEMENT

This application addresses the problem of efficiently updating firmware in Safety Fieldbus-Devices for e.g. Remote Input Output (SRIO) devices while ensuring safe and reliable operations in a secure manner

The application provides solutions for handling firmware updates through multiple protocols, including PROFINET/PROFIsafe or Ethernet/IP CipSafety as well as FSOE and HTTP(s)/JSON, and integrating communication and power supply modules to ensure safe operations during the update process. The application also addresses the need for a user-friendly interface for initiating updates and monitoring the update process through an IoT core interface. Additionally, the application solves the problem of coordinating the update process across input and output modules managed by a microcontroller module to minimize disruption to the SRIO device's operation.

Embodiments of the invention are associated with various advantages and/or technical effects.

There is disclosed a system for updating firmware in Safety Fieldbus-Devices (for e.g Remote Input Output (SRIO) devices), comprising:
a. a communication module configured to handle data transfer for firmware updates via PROFINET/PROFIsafe and/or HTTP/JSON protocols
b. Ethern/IP CipSafety and HTTP(s)/JSON protocols
c. FSOE and HTTP(s)/JSON protocols
d. a power supply module providing power to the system components
e. microcontroller module managing the operation of input and output modules
f. input modules connected to sensors
g. output modules connected to actuators
h. an Internet of Things (IoT) core interface for user interaction and control of the firmware update process
i. a set of DIP switches configured to set the SRIO device into an update state
j. wherein the system is configured to perform a firmware version check, receive and validate a firmware update package, execute the update, and perform post-update validation to ensure successful installation.

The integration of both Fieldbus safety protocol-Stacks (like Profisafe, CipSafety, FSOE for e.g.) and/or HTTP(s)/JSON protocols in the communication module provides versatility in firmware update methods, allowing for compatibility with a wide range of network configurations and ensuring secure data transfer in industrial environments. The lot-Communication can be done by different transport protocols like JSON, MQTT; OPCUA for e.g.

The inclusion of an IoT core interface for user interaction facilitates remote management and control of the firmware update process, enhancing the convenience and efficiency of maintaining the SRIO devices.

The set of DIP switches designed to set the SRIO device into an update state provides a simple and reliable manual method to initiate the firmware update process, which can be crucial in scenarios where remote access is compromised or unavailable.

The system provides the advantage of automated firmware updates for Safe Fieldbus-Devices (like Safety Remote Input Output (SRIO) devices), eliminating the need for manual intervention. (naja den DIL-Schalter müssen wir ja manuell verstellen... erst auf bestimmte Position und nachfolgend wieder in Ursprungszustand)

The system ensures reliable firmware updates by integrating the communication module and power supply module, minimizing the risk of interruptions or failures during the update process.

The system offers a user-friendly IoT interface, allowing users to easily initiate firmware updates and monitor the progress in real-time.

The method includes feedback mechanisms that provide continuous updates to the user, ensuring transparency and visibility into the firmware update process.

The system's microcontroller module efficiently coordinates the update process across input and output modules, minimizing disruption to the Safe Fieldbus-Device's (SRIO device's) operation.

According to a preferred embodiment the system is configured to activate the update state and/or to start the update process by selecting predefined positions of the DIP switches, in particular three DIP switches. For example by setting the DIP switches to the value '999' to activate the update state and/or to the value '000' to start the update process. Preferably the DIP switches are otherwise used for addressing the SRIO device. Advantageously, external activation of the update state and/or start of the update process can be enabled in this way, in particular through manual user interaction

In a development, the system further comprises an IoT interface providing a user-friendly platform for initiating firmware updates and monitoring the update process.

The IoT interface offers a centralized platform for users to easily initiate and monitor firmware updates, simplifying the user experience and reducing the need for technical expertise.

By providing a user-friendly platform, the IoT interface encourages regular firmware updates, contributing to improved security and performance of the SRIO devices.

The ability to monitor the update process through the IoT interface allows for immediate detection and response to any issues, minimizing downtime and potential disruptions to operations.

In a development, the system further comprises a communication module and power supply module being integrated to ensure safe and reliable operations during the firmware update process.

The integration of the communication module with the power supply module ensures a stable power delivery during the firmware update process, reducing the risk of update failures due to power fluctuations.

This integration contributes to the compactness of the system design, saving space and potentially reducing manufacturing costs for the safe Fieldbus-Devices.

Ensuring safe and reliable operations during the update process enhances the overall integrity of the safe Fieldbus-Device (like SRIO devices), leading to increased trust and dependability in industrial applications.

In a development, the system further comprises feedback mechanisms to provide real-time update status to the user via the IoT interface.

Feedback mechanisms provide real-time status updates to users, enabling them to track the progress of firmware updates and quickly address any issues that arise.

Real-time feedback enhances the transparency of the update process, giving users confidence that the SRIO devices are functioning correctly and are up-to-date with the latest firmware.

The immediate availability of update status information through feedback mechanisms can lead to faster resolution times for any problems, thereby reducing system downtime and maintaining operational continuity.

In a development, the system further comprises a microcontroller module being responsible for coordinating the update process across the input and output modules, ensuring minimal disruption to the safe Fieldbus Devices (like SRIO device's) operation.

The microcontroller module's coordination of the update process across input and output modules ensures that the SRIO device remains operational during updates, preventing interruptions to critical industrial processes.

By managing the update process efficiently, the microcontroller module minimizes the risk of errors or conflicts that could arise from simultaneous updates to multiple modules, enhancing the reliability of the system.

The ability of the microcontroller module to ensure minimal disruption during firmware updates allows for seamless integration of new features and security patches, thereby extending the lifespan and capabilities of the SRIO devices.

There is disclosed a method for updating firmware in Safe Fieldbus-Devices (like Safety Remote Input Output (SRIO) devices), comprising:
a. setting the SRIO device into an update state using a set of DIP switches,
b. initiating the firmware update via an IoT core interface,
c. transferring the firmware update package through the communication module,
d. validating the update package and initiating the update process,
e. providing feedback to the user throughout the update process,
f. performing post-update validation to ensure successful installation.

The utilization of DIP switches to set the SRIO device into an update state provides a simple and reliable means for operators to manually initiate the firmware update process, ensuring that the device is ready to receive new firmware without the need for complex software commands or specialized tools.

The IoT core interface for initiating firmware updates enables remote management and automation of the update process, which can lead to increased efficiency and reduced downtime, as updates can be scheduled and managed from a central location.

Providing feedback to the user throughout the update process enhances transparency and allows for real-time monitoring, which can help in quickly identifying and resolving any issues that arise during the firmware update, thereby improving the overall reliability of the update process.

In a development, the method further comprises an update package being structured to include a CRC container header, a container header with detailed metadata, a compatibility list, an APID list, a binary header, and binaries containing the firmware update files.

The inclusion of a CRC container header in the update package ensures data integrity by enabling the detection of any corruption that occur during the transfer of the firmware update, thus preventing the installation of potentially harmful or non-functional firmware.

The detailed metadata within the container header allows for precise identification and verification of the firmware update package, ensuring compatibility with the SRIO device and reducing the risk of installing incorrect or outdated firmware.

The structured update package with a compatibility list and APID list provides a systematic approach to firmware updates, allowing for targeted updates to specific modules or functionalities within the SRIO device, which can minimize the risk of incompatibility issues post-update.

In a development, the method further comprises update process including a feedback loop to confirm receipt and installation of the update.

The feedback loop incorporated into the update process provides a mechanism for confirming the successful receipt and installation of the firmware update, which can enhance the reliability of the update process and provide assurance to the user that the device is operating with the latest firmware.

This feedback mechanism can also facilitate troubleshooting by providing immediate information on the status of the update, enabling quick intervention if any problems are detected during the installation process.

In a development, the method further comprises an update package being received and validated using:
- PROFINET/PROFIsafe,
- Ethernet / IP Cipsafety
- EtherCats /FSOE
and HTTP(s)/JSON; MQTT(s); OPCUA protocols for secure data transfer.

The use of PROFINET/PROFIsafe and HTTP/JSON protocols for receiving and validating the update package ensures secure data transfer, protecting the SRIO device from potential cyber threats and unauthorized access during the update process.

These protocols can also facilitate interoperability and integration with existing industrial network infrastructures, allowing for seamless updates without the need for additional protocol conversion or compatibility adjustments.

In a development, the method further comprises update process being executed with minimal disruption to the SRIO device's operation by coordinating the update across the input and output modules managed by the microcontroller module.

Executing the update process with minimal disruption to the SRIO device's operation allows for critical safety functions to continue without interruption, thereby maintaining the overall safety and productivity of the industrial process in which the SRIO device is deployed.

Coordinating the update across input and output modules managed by the microcontroller module ensures that the update is applied uniformly and efficiently, reducing the likelihood of errors or inconsistencies that could arise from a less coordinated approach.

### BRIEF DESCRIPTION OF DRAWINGS

The present disclosure is illustrated by way of example and not limited in the accompanying figures in which like reference numerals indicate similar elements. Embodiments of the application will now be described with reference to the attached drawings:
Figure 1 schematic system architecture according to the invention
Figure 2 schematic update container
Figure 3 schematic update interaction process
Figure 4 higher resolution of Fig. 3 without reference numbers
Figure 5 safety fieldbus device

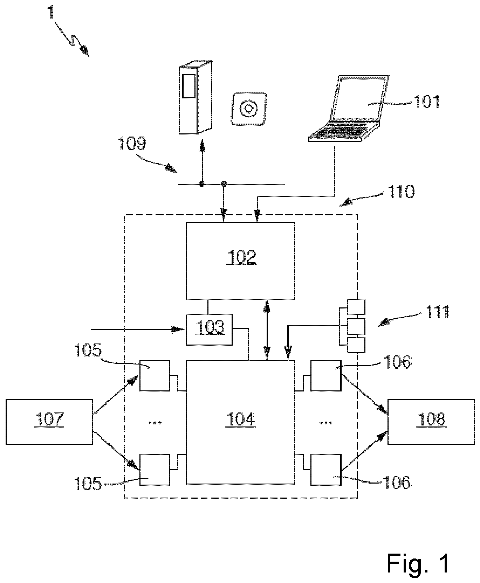

Figure 1 shows a system architecture according to the invention with components and their interactions highlighted. Figure 1 further provides a visual representation of a system designed for updating firmware in SRIO 302 devices. The diagram includes the following components:-'1 01': An IoT Core/Visualizer 101, depicted as a laptop, represents the user 301 interface for monitoring and controlling the firmware update process.- '102': The Communication Module 102 illustrates the means through which data transfer for firmware updates occurs, via protocols such as PROFINET/PROFIsafe and HTTP/JSON.- '103': The Power Supply Module 103 is shown providing the necessary 24V power to the system components; this is essential for the safe operation of the firmware updating process.- '104': A Microcontroller Module 104 is centrally located, representing its role in managing the operations of the input and output modules 106.-'105': Multiple Input Modules 105 are connected to sensors 107, signifying how sensory data is integrated into the SRIO 302 device's function.- '106': Multiple Output Modules 106 are connected to actuators 108, showcasing the system's ability to control mechanical components or systems.- '109': A PROFINET/PROFIsafe connection 109 represents a communication protocol used for industrial networking.- '110': An HTTP/JSON Interface 110 is shown as a part of the communication for data transfer, highlighting an alternate or additional protocol to PROFINET/PROFIsafe.- '111': A set of DIP Switches 111 is included for setting the SRIO 302 device into an update state manually. The diagram also indicates the safety relevance, with dashed lines demarcating the safety-relevant parts within the system compared to the non-safety-relevant parts outside the dashed border. Overall, the figure demonstrates a complex system involving various hardware and software components that work in concert to facilitate secure and reliable firmware updates in SRIO 302 devices under the claims of the patent.

The diagram illustrates the hierarchical organization of a firmware update package's components. At the top level, the CRC Container Header 201 encompasses the entire update package structure, ensuring overall integrity with a CRC of output file 235 after headers and binary files. The Container Header 202 contains metadata such as a boot cookie 203, header version 204, title 205, vendor 206, creation date 207, and product type 208. This header also includes the number of entries and CRC checksums for the compatibility list 215 and APID list 219, as well as the number of binaries 213 and their corresponding header CRC. The Compatibility List 215 includes multiple software compatibility entries, specified in units of 4 bytes, each entry having its own title 205 for identification. This allows the system to check firmware compatibility with the device. The APID List 219 contains APID entries in 32-byte units detailing the application process identifier for the firmware update. The Binary Header 223 outlines the binaries 234' structure, including binary type, binary name, start address, binary size, and binary CRC for each binary file, ensuring that the binaries 234 haven't been tampered with and are correctly sequenced for the update process. The Binaries 234 section is where the actual firmware update files are located, ready to be transferred to the SRIO 302 device for the update process. Each binary file has associated metadata to facilitate its correct installation and verification.

This flowchart begins with the user 301 at the top, interacting with the SRIO 302 device. The user 301 initiates the update process by setting DIP switches 111 to the preferred value '999' on the SRIO 302 device, causing it to enter the update state. This is followed by a power cycle 304. The user 301 then requests a firmware update through the IoT Core 402, after which they receive a confirmation that the update request has started. The update process itself begins, and the SRIO 302 device sends an update package via the IoT Core 402. The user 301 receives feedback that the update package was received and the message to start the update is shown. Another feedback loop informs the user 301 that the update request is received, which denotes an optional step that occur multiple times as indicated by the dotted lines with arrows pointing back. A detailed description of the update process is indicated to be continued on the next image, which suggests that this figure is part of a sequence of figures explaining the process in more detail. The firmware version is checked through the IoT Core 402 with feedback provided on the version status. A user 301 action is then shown where the DIP switches 111 are returned to the '000' position followed by another power cycle 304, concluding the update process. The flow also includes a side reference to an update request loop and the ability for the user 301 to request the update state until the update is initiated. Throughout the diagram, various reference numerals from the claim set are marked next to their corresponding steps, offering cross-reference to the claim descriptions provided in the question prompt.

The process flowchart begins with the user 301 setting the DIP switches 111 on the SRIO 302 device to preferably '999' and performing a power cycle 304. A firmware update request 305 is sent from the IoT Core/Visualizer 101 through the HTTP/JSON Interface 110, which leads to a feedback mechanism 414 confirming the reception of the request. The update request is initiated, followed by a validation check. The microcontroller module 104 interacts with the communication module 102, which receives and validates the firmware update package through the PROFINET/PROFIsafe connection 109, as indicated by the feedback of update image received. Once validated, the DIP switches 111 are set to preferably '000', a power cycle 304 is performed, and the update process begins. This involves setting the update state, transferring the update package, and providing feedback to the user 301 throughout the process, as is seen in the feedback loop 'Request Loop Until Update Initiated 311'. The entire process is coordinated by the microcontroller module 104, ensuring minimal disruption to operation while the firmware is being updated. The binaries 234 containing the firmware update files are then processed according to the structure defined in claim 8, which includes a CRC container header 201, container header 202 with metadata, and a compatibility and APID list 219 with their respective entries and CRCs. Upon completion, post-update validation 417 is conducted to ensure the successful installation of the firmware. The process finishes with a completion confirmation 418 to the IoT core 402 interface, closing the feedback loop and finalizing the update process. Throughout the flowchart, the integration between the communication module 102 and power supply module 103 is emphasized, consistent with claim 3, to ensure safe and reliable operations during the firmware update process.

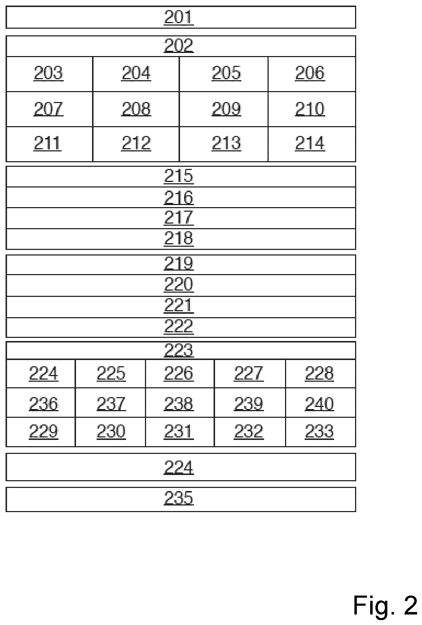

Figure 2 shows details of a structured update container, illustrating the organization of update data according to the invention.

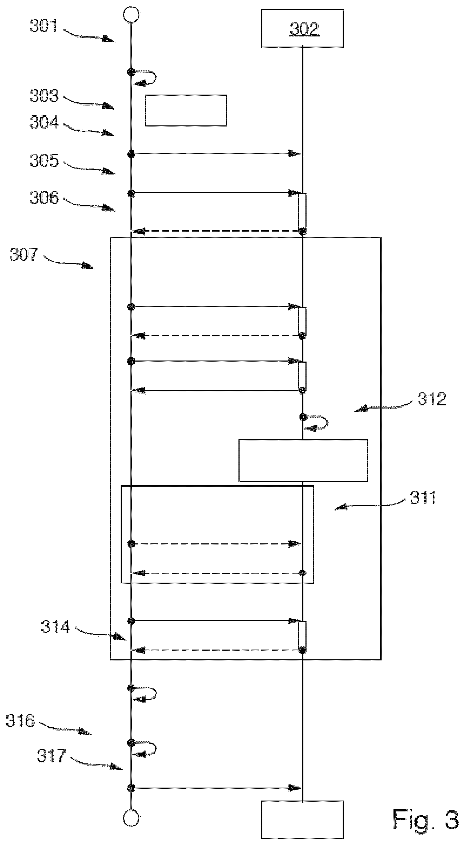

Figure 3 shows outlines of the update interaction process, describing the steps from user initiation to update confirmation.

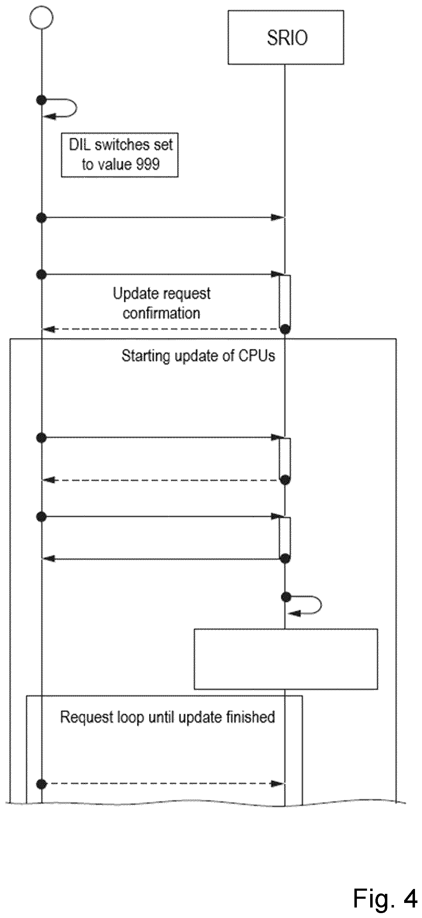

Figure 4 shows Fig. 3 in a higher resolution but without reference numbers.

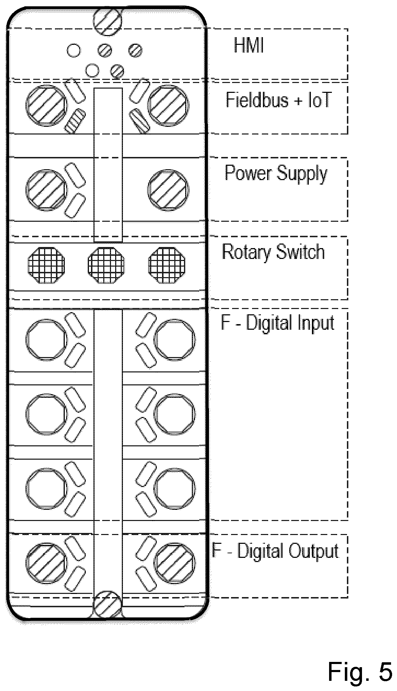

Fig. 5 shows an example of a safety fieldbus FB device with different ports, for Inputs and outputs, Three rotary switches and power supplies. Fieldbus and IoT Connectors and a HMI Part for signaling different information for the user.

### REFERENCE NUMERAL LIST

- 101: IoT Core/Visualizer
- 102: Communication Module
- 103: Power Supply Module
- 104: Microcontroller Module
- 105: Input Modules
- 106: Output Modules
- 107: Sensors
- 108: Actuators
- 109: PROFINET/PROFIsafe Connection
- 110: HTTP/JSON Interface
- 111: DIP Switches
- 201: CRC Container Header
- 202: Container Header
- 203: Bootcookie
- 204: Header Version
- 205: Title
- 206: Vendor
- 207: Creation Date
- 208: Product Type
- 209: Number of Compatibility List Entries
- 210: Compatibility List CRC
- 211: Number of APID List Entries
- 212: APID List CRC
- 213: Number of Binaries
- 214: Binary Header CRC
- 215: Compatibility List
- 216: Software Compatibility Entry 0
- 217: Software Compatibility Entry 1
- 218: Software Compatibility Entry n
- 219: APID List
- 220: APID Entry 0
- 221: APID Entry 1
- 222: APID Entry n
- 223: Binary Header
- 224: Binary Type File 0
- 225: Binary Name File 0
- 226: Start Address File 0
- 227: Binary Size File 0
- 228: Binary CRC File 0
- 229: Binary Type File n
- 230: Binary Name File n
- 231: Start Address File n
- 232: Binary Size File n
- 233: Binary CRC File n
- 234: Binaries
- 235: CRC of Output File
- 236: Binary Type File 1
- 237: Binary Name File 1
- 238: Start Address File 1
- 239: Binary Size File 1
- 240: Binary CRC File 1
- 301: User
- 302: SRIO
- 303: Set DIP Switches to 999
- 304: Power Cycle
- 305: Firmware Update request
- 306: Feedback of Firmware Request
- 307: Start Update
- 311: Request Loop Until Update Initiated
- 314: Feedback: Update Image Received
- 316: Set DIP Switches to 000
- 317: Perform Power Cycle
- 402: IoT Core
- 412: Update Request Initialization
- 413: Update Validation Check
- 414: Feedback Mechanism
- 415: Update Image Reception
- 417: Post-Update Validation
- 418: Completion Confirmation

## Claims

1. A system for updating firmware in a Safety Remote Input Output SRIO device (302), comprising:
a. a communication module (102) configured to handle data transfer for firmware updates, in particular via PROFINET/PROFIsafe and/or HTTP/JSON protocols,
b. a power supply module (103) providing power to the system components,
c. a microcontroller module (104) managing the operation of input and output modules (106),
d. input modules (105) connected to sensors (107),
e. output modules (106) connected to actuators (108),
f. an Internet of Things (IoT) core interface for user (301) interaction and control of the firmware update process,
g. a set of DIP switches (111) configured to set the SRIO device (302) into an update state,
h. wherein the system is configured to perform a firmware version check, receive and validate a firmware update package, execute the update, and perform post-update validation (417) to ensure successful installation.

2. The system of claim 1, wherein the IoT core interface (402) provides a user (301)-friendly platform for initiating firmware updates and monitoring the update process.

3. The system of claim 1, wherein the communication module (102) and power supply module (103) are integrated to ensure safe and reliable operations during the firmware update process.

4. The system of claim 1, further comprising feedback mechanisms to provide real-time update status to the user (301) via the IoT core interface (402).

5. The system of claim 1, wherein the microcontroller module (104) is responsible for coordinating the update process across the input and output modules (106), ensuring minimal disruption to the SRIO device (302)'s operation.

6. The system of claim 1, wherein the system is configured to activate the update state and/or to start the update process by selecting predefined positions of the DIP switches (111).

7. A method for updating firmware in Safety Remote Input Output
(SRIO (302)) devices, in particular by using the system of claim 1, comprising:
a. setting the SRIO device (302) into an update state using a set of DIP switches (111),
b. initiating the firmware update via an IoT core interface (402),
c. transferring the firmware update package through the communication module (102),
d. validating the update package and initiating the update process,
e. providing feedback to the user (301) throughout the update process,
f. performing post-update validation (417) to ensure successful installation.

8. The method of claim 7, wherein the update package is structured to include a CRC container header (201), a container header (202) with detailed metadata, a compatibility list (215), an APID list (219), a binary header (223), and binaries (234) containing the firmware update files.

9. The method of claim 7, wherein the update process includes a feedback loop to confirm receipt and installation of the update.

10. The method of claim 7, wherein the update package is received and validated using PROFINET/PROFIsafe and/or HTTP/JSON protocols for secure data transfer.

11. The method of claim 7, wherein the update process is executed with minimal disruption to the SRIO device (302)'s operation by coordinating the update across the input and output modules (106) managed by the microcontroller module (104).
